# FASCICULE DE BREVET EUROPEEN

(11) **EP 2 067 238 B1**
(45) Date de publication et mention de la délivrance du brevet: **07.09.2011**
(21) Numéro de dépôt: 07823823.5
(22) Date de dépôt: 13.09.2007
(51) Int. Cl.: H02K 1/24, H02K 1/28

(54) **ARBRE DE ROTOR A GRIFFES, ROTOR A GRIFFES EQUIPE D'UN TEL ARBRE ET MACHINE ELECTRIQUE TOURNANTE EQUIPEE D'UN TEL ROTOR**
MIT ZÄHNEN AUSGESTATTETE ROTORWELLE, MIT EINER SOLCHEN WELLE AUSGESTATTETER ROTOR MIT ZÄHNEN UND MIT EINEM SOLCHEN ROTOR AUSGESTATTETE ELEKTRISCHE DREHMASCHINE
TOOTHED-ROTOR SHAFT, TOOTHED ROTOR EQUIPPED WITH SUCH A SHAFT AND ROTARY ELECTRICAL MACHINE EQUIPPED WITH SUCH A ROTOR

(30) Priorité: 13.09.2006 FR 0653720
(43) Date de publication de la demande: 10.06.2009
(73) Titulaire: VALEO EQUIPEMENTS ELECTRIQUES MOTEUR, 94046 Créteil Cedex (FR)
(72) Inventeur: GAS, Olivier, 92400 Courbevoie (FR); PFLEGER, Alexandre, 93160 Noisy Le Grand (FR)
(74) Mandataire: Gamonal, Didier
(86) Numéro de dépôt international: PCT/FR2007/051927
(87) Numéro de publication internationale: WO 2008/031995

(56) Documents cités:
- EP-A- 0 866 541
- DE-A1- 3 008 454
- US-A- 4 588 915

## Description

### Domaine de l'invention

L'invention concerne un arbre de rotor à griffes, un rotor à griffes équipé d'un tel arbre et une machine électrique tournante équipée d'un tel rotor.

### Etat de la technique

De nombreuses machines électriques tournantes sont équipées d'un rotor à griffes.

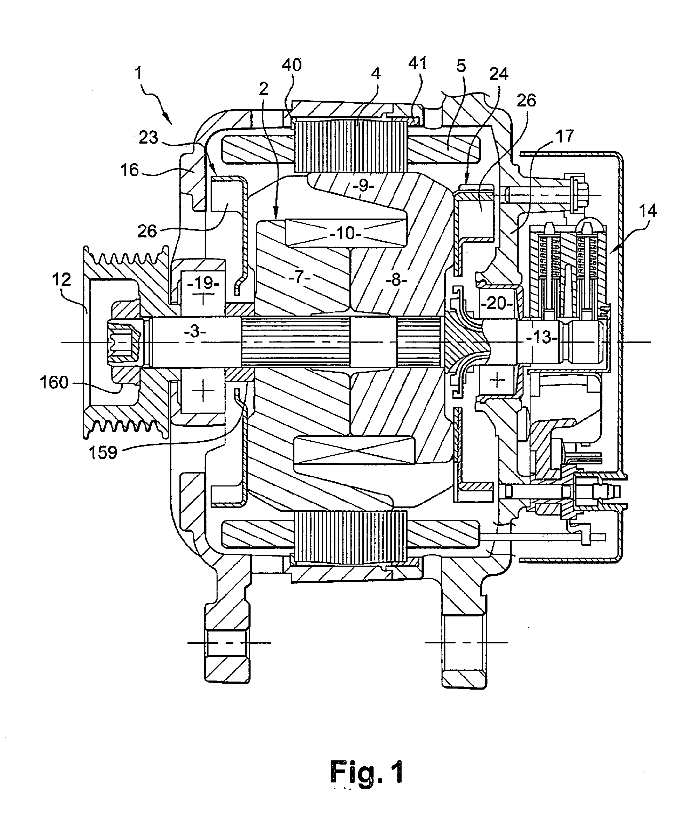

Par exemple à la figure 1, on décrit ci-après une telle machine sous la forme d'un alternateur compact et polyphasé, notamment pour véhicule automobile. Cet alternateur transforme de l'énergie mécanique en énergie électrique et peut être réversible. Un tel alternateur réversible est appelé alterno-démarreur et dans un autre mode de fonctionnement transforme de l'énergie électrique en énergie mécanique notamment pour démarrer le moteur thermique du véhicule.

Cette machine comporte essentiellement un carter 1 et, à l'intérieur de celui-ci, un rotor 2 à griffes, solidaire en rotation d'un arbre 3, et un stator 4, qui entoure le rotor avec présence d'un faible entrefer et qui comporte un corps en forme d'un paquet de tôles doté d'encoches, ici du type semi fermé, équipées d'isolant d'encoches pour le montage des phases du stator, comportant chacune au moins un enroulement formant de part et d'autre du corps du stator un chignon 5.

Les enroulements sont obtenus par exemple à partir d'un fil continu recouvert d'émail ou à partir d'éléments conducteurs en forme de barre, tels que des épingles reliées entre elles par exemple par soudage.

Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET, notamment lorsqu'il s'agit d'un alterno-démarreur comme décrit par exemple dans le document FR A 2 745 445 (US A 6 002 219).

Le nombre de phases dépend des applications et peut être supérieur à trois, un ou deux ponts redresseurs pouvant être prévus.

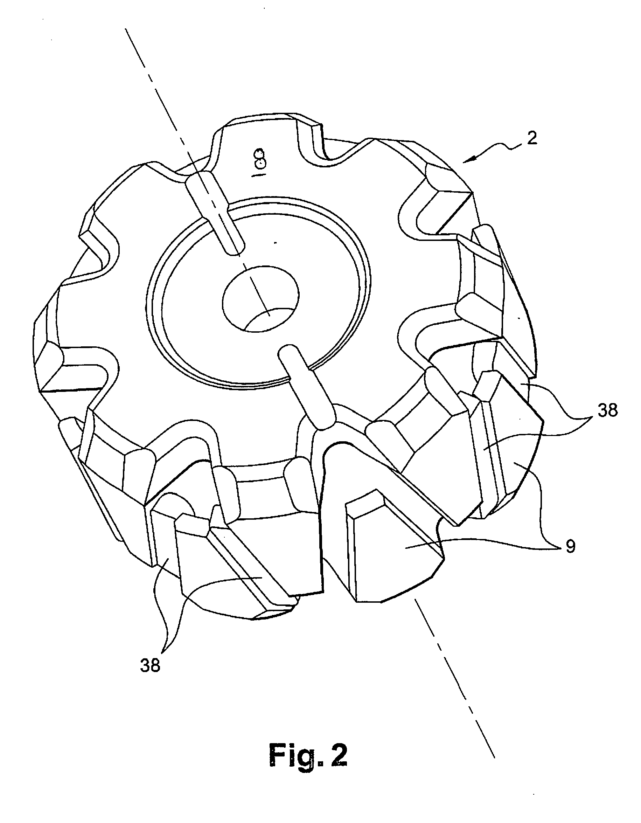

Le rotor à griffes 2 (figure 1 et 2) comporte deux roues polaires 7, 8 axialement juxtaposées et de forme annulaire présentant chacune un flasque transversal pourvu à sa périphérie externe de dents 9 de forme trapézoïdale dirigées axialement vers le flasque de l'autre roue polaire, la dent d'une roue polaire pénétrant dans l'espace existant entre deux dents 9 adjacentes de l'autre roue polaire, de sorte que les dents des roues polaires soient imbriquées. les flasques des roues 7, 8 sont de forme annulaire et présentent à leur périphérie externe des saillies radiales (non référencées) raccordées par des chanfreins aux dents 9. Ces saillies forment des griffes avec les dents 9. Le nombre de dents 9 dépend des applications et notamment du nombre de phases du stator. A la figure 2 il est prévu huit dents par roue polaire. En variante chaque roue polaire comporte six ou sept dents.

Un noyau cylindrique est intercalé axialement entre les flasques des roues 7,8. Ici ce noyau consiste en deux demi noyaux appartenant chacun à l'un des flasques.

Ce noyau porte à sa périphérie externe un bobinage d'excitation 10. Un isolant, tel qu'une bobine de support du bobinage 10, est intercalé radialement entre le noyau et le bobinage 10.

L'arbre 3 du rotor 2 porte à son extrémité avant un organe d'entraînement, tel qu'une une poulie 12 appartenant à un dispositif de transmission de mouvements à au mois une courroie entre l'alternateur et le moteur thermique du véhicule automobile, et à son extrémité arrière 13, de diamètre réduit, des bagues collectrices reliées par des liaisons filaires aux extrémités du bobinage d'excitation du rotor. Les liaisons filaires et les bagues collectrices appartiennent ici à un collecteur rapporté du type de celui décrit dans le document FR 2 710 197. Des balais appartiennent à un porte-balais 14 et sont disposés de façon à frotter sur les bagues collectrices. Le porte-balais est relié à un régulateur de tension. Les extrémités avant et arrière de l'arbre 3 comportent donc chacune plusieurs tronçons.

Lorsque le bobinage d'excitation 10 est alimenté électriquement à partir des balais, le rotor 2, en matériau ferromagnétique, est magnétisé et devient un rotor inducteur avec formation de pôles magnétiques au niveau des dents des roues polaires.

Ce rotor inducteur 10 crée un courant induit alternatif dans le stator induit lorsque l'arbre 3 tourne, le ou les ponts redresseurs permettant de transformer le courant alternatif induit en un courant continu, notamment pour alimenter les charges et les consommateurs du réseau de bord du véhicule automobile, ainsi que pour recharger la batterie dudit véhicule.

Le carter 1 porte intérieurement à sa périphérie externe le stator 4 et centralement à rotation l'arbre 3. Ce carter est ici en deux parties, à savoir un palier avant 16 adjacent à la poulie 12 et un palier arrière 17 portant le porte-balais, le régulateur de tension et au moins un pont redresseur. Les paliers sont de forme creuse et comportent chacun centralement un roulement à billes respectivement 19 et 20 pour le montage à rotation de l'arbre 3 du rotor 2. Le diamètre du roulement 19 est supérieur à celui du roulement 20.

A la figure 1, il est prévu à la périphérie externe du corps du stator 4 un système élastique pour filtrer les vibrations, avec à l'avant un joint plat 40 et à l'arrière des tampons 41, de la résine souple et thermoconductrice étant intercalée entre le palier avant et le corps du stator pour évacuer la chaleur. En variante les paliers 16, 17 portent rigidement le corps du stator 4.

Les paliers sont, dans la figure 1, ajourés pour permettre le refroidissement de l'alternateur par circulation d'air. A cette fin, le rotor 2 porte au moins à l'une de ses extrémités axiales un ventilateur destiné à assurer cette circulation de l'air. Dans l'exemple représenté, un ventilateur 23 est prévu sur la face frontale avant du rotor et un autre ventilateur 24, plus puissant, sur la face dorsale arrière du rotor, chaque ventilateur étant pourvu d'une pluralité de pales 25, 26.

La puissance de la machine peut encore être augmentée en utilisant des ventilateurs plus performants tels que des ventilateurs obtenue par superposition de deux ventilateurs élémentaires comportant chacun une série de pales comme décrit par exemple dans le document FR A 2 741 912 et comme visible à la figure 1 pour le ventilateur arrière 24.

En variante, l'alternateur peut aussi être refroidi par eau, le carter étant alors configuré pour comporter un canal de circulation d'eau approprié.

Les performances, à savoir la puissance et le rendement, de la machine électrique tournante peuvent encore être augmentées en utilisant un rotor présentant la configuration selon la figure 2. Ce rotor comporte, de façon exemple décrite par exemple dans les brevets français N° 2 793 085 et 2 784 248, un certain nombre d'aimants permanents 38 disposés de manière symétrique par rapport à l'axe du rotor et interposés entre deux dents 9 adjacentes à la périphérie interne du stator.

A la figure 2 il est prévu quatre paires d'aimants 38 pour huit paires de pôles.

En variante le nombre d'aimants est égal au nombre de paire de pôles.

L'arbre 3 et les roues polaires 7, 8 sont ici en acier, les roues polaires étant en acier doux et l'arbre 3 en acier plus dure.

Ce type de machine donne donc satisfaction.

Néanmoins un problème se pose car la solidarisation de l'arbre 3 avec les roues polaires 7,8 est réalisée par emmanchement à force de l'arbre 3 plus dur dans les alésages internes des roues 7, 8, l'arbre 3 présentant pour ce faire des portions moletées saillantes radialement de longueurs inégales non référencées à la figure 1.

Plus précisément l'arbre 3 présente une portion intermédiaire lisse entre ses deux portions moletées saillantes. Le diamètre de cette portion intermédiaire lisse est égal à celui de l'extrémité avant de l'arbre servant au montage du roulement 19. L'extrémité arrière de l'arbre 3 est de plus petit diamètre. Un jeu radial existe entre la périphérie interne de la roue polaire 8 et la périphérie externe du tronçon intermédiaire lisse.

La longueur axiale de ce tronçon intermédiaire lisse est inférieure à celle des portions moletées.

Préalablement à cet emmanchement à force on presse les roues 7,8 l'une contre l'autre notamment pour un bon passage du flux magnétique.

Ceci a pour conséquence de diminuer le diamètre intérieur des roues polaires en sorte que l'effort nécessaire pour emmancher l'arbre est augmenté.

Il en résulte que l'arbre risque de flamber, sachant que l'extrémité arrière de cet arbre est de diamètre réduit pour montage des bagues collectrices.

En outre les stries des portions moletées ne sont jamais orientées de façon parfaitement rectiligne selon une direction axiale, mais elles sont généralement de forme hélicoïdale ce qui provoque l'apparition de contrainte de torsion susceptible de provoquer un mouvement relatif de rotation entre les roues polaires lorsque l'effort de pression sur celles-ci est relâché.

De plus les déformations non uniformes engendrées lors de l'emmanchement de l'arbre à portions moletées dans les roues polaires ne permettent pas d'obtenir une concentricité suffisamment précise des roues polaires par rapport à l'axe de l'arbre en sorte qu'il est nécessaire de réaliser une opération d'usinage de la périphérie externe des dents des roues pour garantir un faible entrefer entre le rotor et le stator, ainsi qu'une bonne concentricité entre la périphérie externe des dents et l'axe de l'arbre.

Il en est de même lorsque l'alternateur est sans balais comme décrit par exemple dans le document FR 2 744 575 auquel on se reportera. Dans ce cas le rotor à griffes comporte une roue polaire principale étagée portant à sa périphérie externe, via un anneau amagnétique, les dents de l'autre roue polaire dépourvue de flasque, le bobinage d'excitation étant porté par un noyau fixe.

Dans le document DE 300 84 54 on remplace les portions moletées de la figure 1 par des gorges avec un fond à stries axiales comme mieux visible à la figure 4 de ce document. La matière des roues polaire est déformée pour pénétrer dans les gorges. On notera que les fonds à stries axiales des gorges de faible longueur axiale ne sont pas faciles à usiner.

### Objet de l'invention

La présente invention a pour objet de pallier ces inconvénients.

Suivant l'invention un arbre de rotor à griffes du type sus indiqué comportant une extrémité avant dotée de plusieurs tronçons, une extrémité arrière et un tronçon intermédiaire de support et de fixation du rotor à griffes présentant, d'une part, deux zones moletées, dites zones de sertissage, destinées à être assemblées avec le rotor à griffes par déformation locale de matière du rotor à griffes (2), et d'autre part, une zone de centrage destinée à centrer le rotor à griffes et disposée entre les zones de sertissage, ladite zone de centrage s'étendant en saillie radiale par rapport au zones de sertissage, est caractérisé en ce que les zones de sertissage s'étendent en saillie radiale par rapport au tronçon radialement de plus grande taille de l'extrémité avant de l'arbre

Dans un mode de réalisation, la machine électrique tournante étant sans balais, les zones de sertissage sont assemblées avec les extrémités axiales de la roue polaire principale.

Dans un autre mode de réalisation, la machine électrique tournante étant dotée de balais, chaque zone de sertissage est assemblée avec l'une des roues polaires.

Grâce à l'invention le tronçon intermédiaire de support et de fixation est plus épais que l'extrémité avant de l'arbre en sorte que celui-ci présente une bonne résistance mécanique.

En outre l'usinage des zones de sertissage est plus facile à réaliser du fait que celles-ci sont radialement saillantes par rapport à l'extrémité avant de l'arbre.

L'une au moins des zones de sertissage peut être prolongée pour fixer un autre composant de la machine électrique tournante, tel que l'entretoise 159 de la figure 1.

Suivant l'invention un rotor à griffes est caractérisé en ce qu'il est équipé d'un arbre du type sus-indiqué monté dans son alésage central.

Ce rotor est assemblé avec l'arbre par déformation locale de matière au niveau des zones de sertissage de l'arbre.

Dans un mode de réalisation la roue principale du rotor à griffes est assemblée avec l'arbre par déformation locale de matière de la roue polaire principale au niveau des zones de sertissage de l'arbre.

Dans un autre mode de réalisation les roues polaires du rotor à griffes sont assemblées avec l'arbre par déformation locale de matière des roues polaires au niveau des zones de sertissage.

Cette déformation est une déformation plastique, la matière de la roue polaire principale ou des roues polaire fluant.

Cette déformation plastique est générée à l'aide d'un outil de sertissage

Dans un mode de réalisation la roue polaire principale ou chaque roue polaire présente une empreinte, telle qu'une empreinte de forme annulaire éventuellement fractionnée, au niveau respectivement de la face frontale et dorsale du rotor.

Ainsi dans un mode de réalisation à l'aide d'un outil de forme tronconique coopérant avec l'empreinte on repousse la matière de la roue polaire vers l'intérieur et vers la zone de sertissage concernée de l'arbre.

En variante c'est l'outil lui-même qui réalise l'empreinte.

Suivant l'invention une machine électrique tournante est caractérisée en ce qu'elle est équipée à fixation d'un tel rotor à griffes.

Grâce à l'invention l'arbre ne risque pas de flamber lors de son emmanchement dans la roue polaire principale ou les roues polaires du fait que les zones de sertissage ont radialement une taille inférieure à celle de la zone de centrage et que l'on obtient un ajustement de centrage entre l'arbre et le ou les alésages respectivement de la roue polaire principale et des roues polaires. On diminue les contraintes mécaniques entre l'arbre et la roue polaire principal ou les roues polaires car c'est la matière de la roue polaire principale ou des roues polaire qui pénètre dans les zones de sertissage.

Grâce à l'invention la configuration générale de la roue polaire principale ou des roues polaires est conservée et on tire partie du fait que la roue polaire principale ou les roues polaires ont une dureté inférieur à celle de l'arbre ce qui permet de déformer celles-ci et de faire fluer la matière de la roue polaire principale ou des roues polaires des les zones de sertissage.

En outre l'usinage de l'alésage interne des roues polaires est simplifié puisqu'il n'y a pu à prévoir, comme à la figure 1, une portion tronconique à l'extrémité de l'alésage du demi noyau d'une roue polaire.

De plus on obtient une bonne précision et concentricité de l'assemblage des roues polaires avec l'arbre du fait de la présence de la zone de centrage de l'arbre.

Il en résulte qu'il n'y a pas besoin, après assemblage, de faire une opération de reprise de la périphérie externe des dents des roues polaires.

On usine par avance à l'aide d'un outil cette périphérie externe, c'est-à-dire avant montage du bobinage d'excitation entre les flasques des roues polaires et sur le noyau, en sorte que des copeaux ne risquent pas d'endommager ce bobinage d'excitation non présent à ce stade.

De plus on peut lubrifier l'outil ce qui n'est pas possible lorsque le bobinage d'excitation est présent.

La configuration de l'arbre selon l'invention permet de monter aisément des aimants permanents entre deux dents adjacentes du rotor. Ainsi on peut monter les aimants sur une roue polaire et présenter l'autre roue polaire dans la bonne position angulaire. Cette configuration ne sera pas modifiée par l'introduction de l'arbre car il n'y a pas apparition de contrainte de torsion susceptible d'occasionner un mouvement relatif entre les roues lorsque l'effort de pression sur les roues est relâché.

Dans un mode de réalisation les zones de sertissages sont séparées de la zone de centrage chacune par un moyen de séparation, tel qu'une gorge pour préserver la zone de centrage et dégager les outils d'usinage des moletages des zones de sertissage.

Dans un mode de réalisation la zone de centrage est lisse.

En variante cette zone de centrage est fractionnée et comporte au moins deux portions lisses.

Dans un mode de réalisation la zone de centrage est de section circulaire ainsi que les zones de sertissage et le diamètre externe de la zone de centrage est supérieur à celui des zones de sertissage de l'arbre.

Le tronçon radialement de plus grande taille de l'extrémité avant de l'arbre est également cylindrique et présente un diamètre inférieur à celui des zones de sertissage.

Ainsi, avant sertissage des roues polaires sur les zones de sertissage de l'arbre on peut faire tourner l'une par rapport à l'autre les roues polaires, alors en contact intime avec la zone de centrage de l'arbre de plus grand diamètre que les zones de sertissage sans endommager l'extrémité avant de l'arbre.

Dans un mode de réalisation la zone de centrage a une longueur supérieure à celle de chaque zone de sertissage.

Selon un premier mode de réalisation les zones de sertissage de l'arbre comportent des stries d'orientation axiale et sont associées chacune à une gorge, dite gorge de sertissage.

Ainsi les stries permettent de bloquer en rotation les roues polaires par rapport à l'arbre, tandis que les gorges permettent de bloquer en translation les roues polaires par rapport à l'arbre.

Dans un mode de réalisation la gorge de sertissage est plus profonde que la gorge de séparation.

Dans un mode de réalisation l'une au moins des gorges est réalisée dans une zone de sertissage.

Dans un second mode de réalisation plus économique et plus performant les stries sont croisées en sorte qu'elles assurent un blocage en translation et en rotation des roues polaires par rapport à l'arbre.

Bien entendu ces modes de réalisations peuvent être considérées isolément ou en combinaison.

Ainsi l'une des zones de sertissage peut comporter des stries croisées et l'autre des stries d'orientation axiale en combinaison avec une gorge réalisée dans cette zone ou de manière adjacente à cette zone.

### Brève description des dessins

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant des modes de réalisation de l'invention et dans lesquels
- la figure 1 est une vue en coupe axiale d'une machine électrique tournante de l'état de la technique ;
- la figure 2 est une vue en perspective d'un rotor d'une machine électrique tournante équipée d'aimants permanents pour augmenter la puissance de la machine ;
- la figure 3 est une vue de face d'un premier mode de réalisation de l'arbre du rotor à griffes selon l'invention;
- la figure 4 est une vue analogue à la figure 3 pour un deuxième mode de réalisation selon l'invention;
- la figure 5 est une vue en coupe axiale du rotor à griffes équipé de l'arbre de la figure 3 avant l'opération de sertissage du rotor sur les zones de sertissage ;
- la figure 6 est une vue partielle en coupe axiale du rotor à griffes, sans le bobinage d'excitation ; équipé de l'arbre de la figure 4 avant l'opération de sertissage du rotor sur les zones de sertissage ;
- la figure 7 est une vue partielle de la figure 5 montrant l'outil de sertissage avant sa pénétration dans l'empreinte de sertissage de la roue polaire arrière;
- la figure 8 est une vue en perspective montrant la roue polaire arrière et l'extrémité de l'arbre équipé de son collecteur rapporté, ainsi que l'outil de sertissage avant l'opération de sertissage;
- les figures 9, 9A, 9B sont des vues partielles montrant les différentes étapes de l'opération de sertissage de l'assemblage de la roue polaire arrière avec la zone de sertissage concernée de l'arbre ;
- la figure 10 est une vue partielle analogue à la figure 4 pour encore un autre mode de réalisation.

### Description de modes de réalisation de l'invention

Dans les figures les éléments identiques seront affectés des mêmes signes de référence.

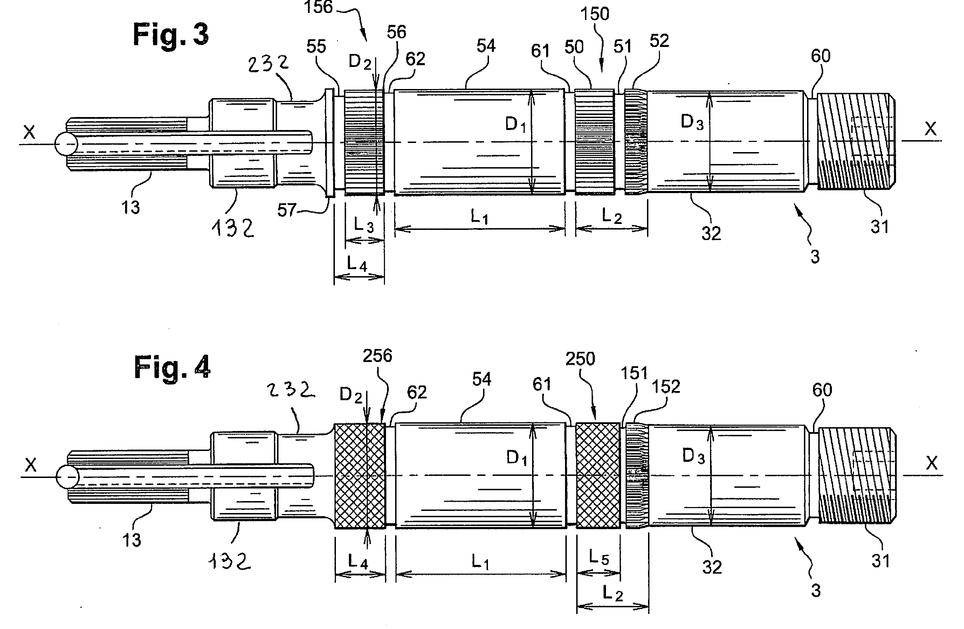

Dans les figures 3 et 4 on voit deux réalisations de l'arbre 3 selon l'invention destiné à être assemblé avec des roues polaires 7, 8 de la figure 1.

Cet arbre, ici métallique, présente des extrémités avant 31, 60, 32 et arrière 13 identiques à celles de l'arbre de la figure 1 et un tronçon intermédiaire support et de fixation des roues polaire du rotor 2.

L'arbre 3 est en une matière plus dure que les roues polaires 7, 8 du rotor à griffes 2, également métallique.

Ici les roues polaires 7, 8 sont en acier doux, tandis que l'arbre 3 est en acier à plus grande teneur en carbone que les roues 7,8.

L'extrémité avant de l'arbre comporte plusieurs tronçons dont l'un est radialement de plus grande taille.

Plus précisément l'extrémité avant de l'arbre 3 comporte un deuxième tronçon 32 lisse de montage de la bague interne du roulement à billes avant 19, une gorge de raccordement 60 du deuxième tronçon à un premier tronçon fileté 31 pour le vissage de l'écrou 160 de la figure 1.

Les tronçons 31, 32 sont ici cylindriques et il en est de même de l'arbre 3.

Le deuxième tronçon 32 présente un diamètre D3 supérieur au diamètre du tronçon filetée 31.

L'écrou 160 permet de serrer la poulie 12, la bague interne du roulement 19 et une entretoise 159 entre l'écrou et la face avant de la roue polaire avant 7.

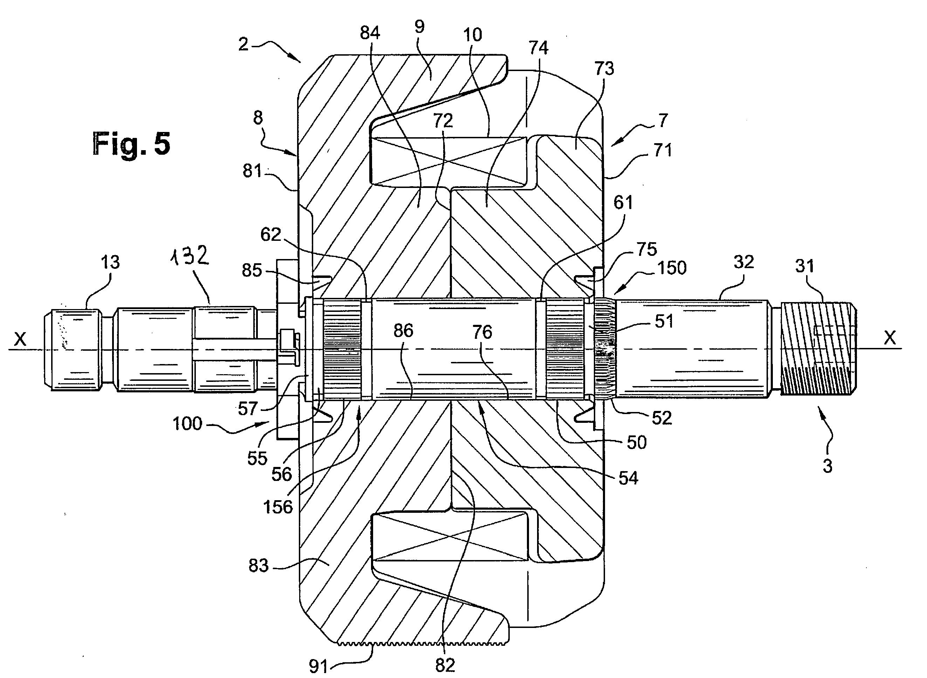

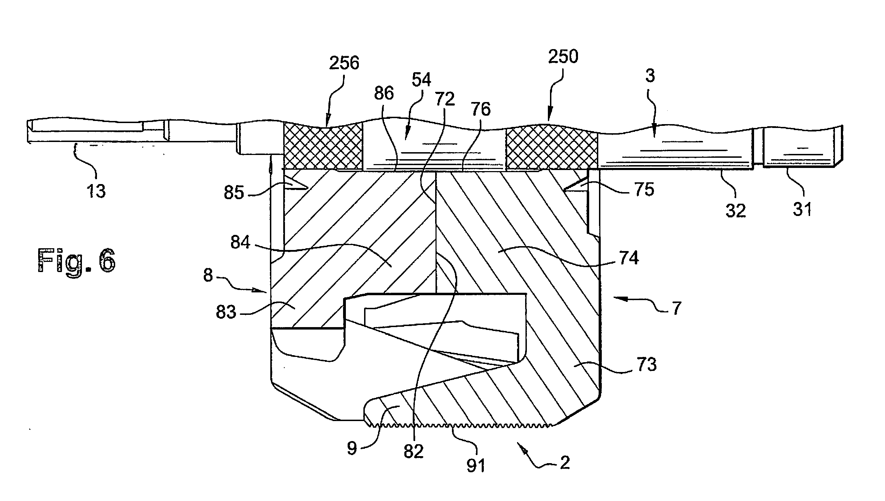

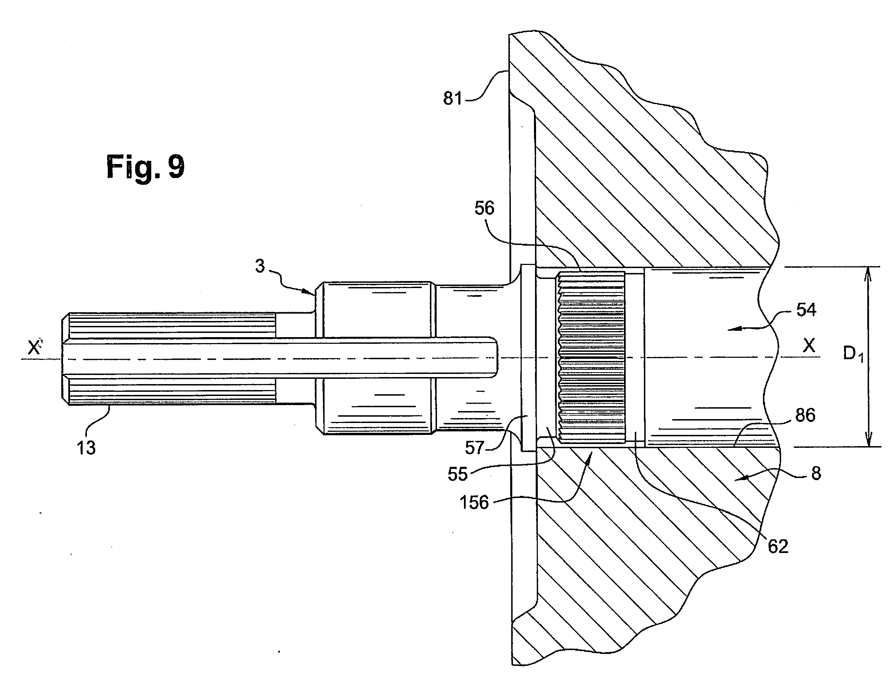

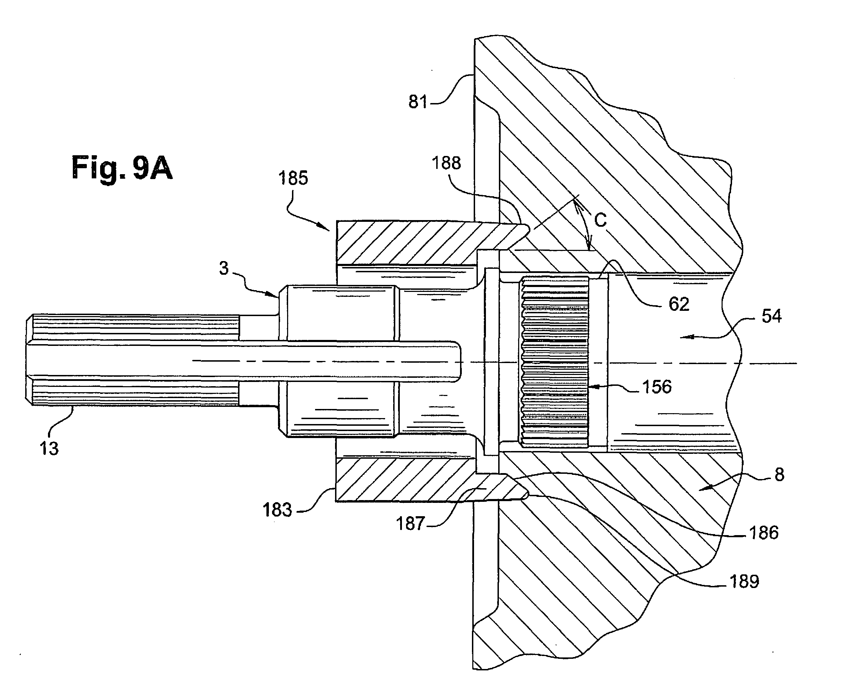

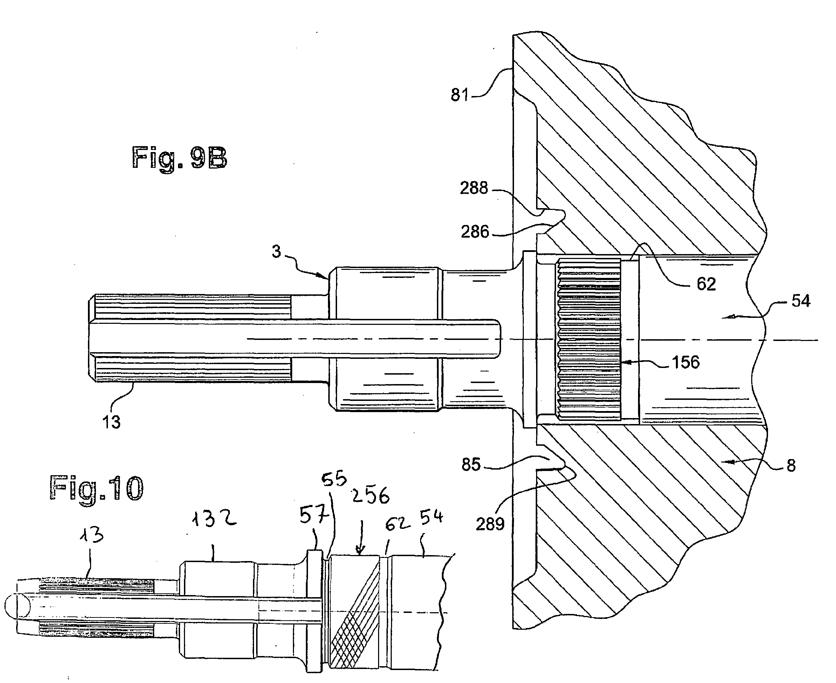

L'extrémité arrière 13 de l'arbre 3 cylindrique est représentée dans ces figures 3 et 4, ainsi que dans les figures les figures 6, 9, 9A, 9B, sans le montage des bagues collectrices et du collecteur rapporté de la figure 1, représenté en 100 dans les figures 5, 7 et 8.

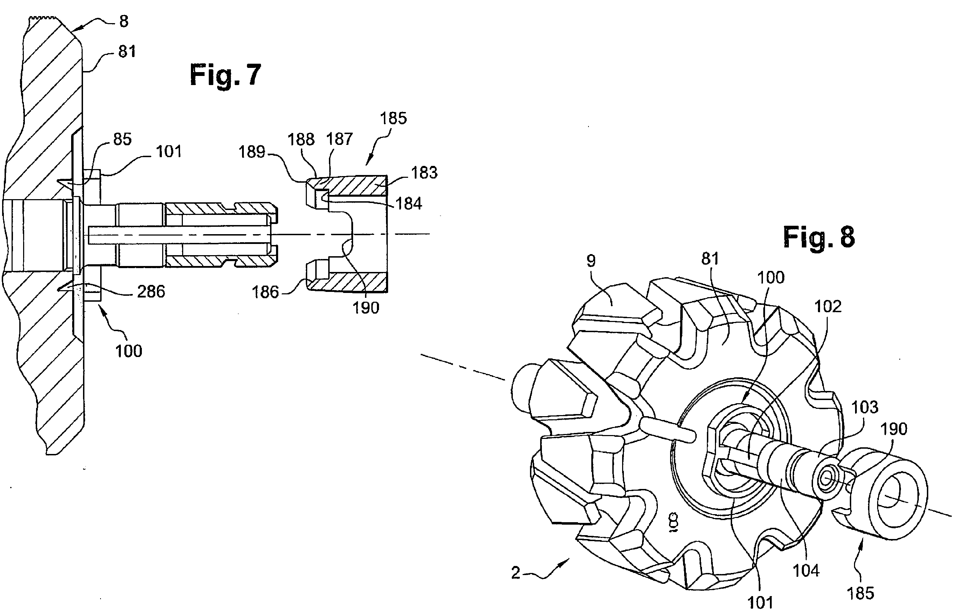

Comme décrit dans le document FR 2 710 197, auquel on se reportera, on voit à la figure 8 en 103 et 104 les bagues collectrices, en 102 l'une des branches en matière plastique du collecteur 100 se raccordant à l'anneau 101 de celui-ci.

Dans cette figure 8 chaque roue polaire comporte six griffes, en variante sept ou huit griffes.

Les parties conductrices de liaison avec les bagues 103, 104 sont noyées dans les branches 102 et sont dénudées au niveau de l'anneau 101 pour liaison avec les extrémités du bobinage d'excitation.

On voit dans ces figures 3 et 4 que l'extrémité 13 comporte un tronçon d'extrémité arrière cylindrique de diamètre réduit par rapport aux autres tronçons de l'arbre 1.

Ce tronçon d'extrémité, appelé quatrième tronçon, est cannelé comme visible dans les figures 3 et 4 pour emmanchement à force du connecteur sur l'arbre.

Cette extrémité 13 comporte des rainures diamétralement pour le passage des branches 102 du collecteur rapporté. L'une de ces rainures est visible dans les figures 3 et 4 sans être référencée.

L'extrémité arrière 13 comporte également un troisième tronçon cylindrique 132 de montage de la bague interne du roulement à billes arrière 20 de plus petit diamètre que le roulement 19.

Le diamètre de ce troisième tronçon 132 est supérieur à celui du quatrième tronçon d'extrémité et inférieur au diamètre D3 du deuxième tronçon 32.

Les rainures de l'extrémité 13 affectent le troisième tronçon 132 ainsi qu'en partie un cinquième tronçon cylindrique 232 adjacent au tronçon intermédiaire de support et de fixation des roues polaires.

Le diamètre de ce cinquième tronçon 232 est inférieur à celui du troisième tronçon 132 et supérieur à celui du quatrième tronçon. Ce cinquième tronçon 232 permet d'implanter l'anneau du collecteur entre la roue polaire 8 et le roulement 20.

Bien entendu la forme des extrémités avant et arrière de l'arbre dépend des applications.

Ainsi dans un autre mode de réalisation le deuxième tronçon 32 comporte à l'avant une portion cannelée et l'alésage interne de la poulie 12 métallique est également cannelé pour son emmanchement à force sur la portion cannelée du deuxième tronçon.

Tout dépend du mode d'assemblage de la poulie 12, qui en variante est remplacé par une roue dentée.

De même la forme de l'extrémité arrière 13 dépend de la forme du collecteur.

Cette extrémité arrière 13 est dans un autre mode de réalisation dépourvue de bague collectrice et de collecteur, l'alternateur étant alors sans balais et le bobinage d'excitation porté par le carter.

L'un au moins des tronçons des extrémités avant et arrière de l'arbre, en variante, peut présenter une section autre que circulaire.

L'arbre 3 présente entre ses extrémités avant et arrière un tronçon intermédiaire de fixation et de support des roues 7, 8. Ce tronçon intermédiaire est modifié, notamment en épaisseur, pour avoir une meilleure précision et une meilleure concentricité de l'assemblage des roues polaires 7, 8 du rotor à griffe avec l'arbre 3.

On tire partie de la différence de dureté entre l'arbre 3 et les roues polaires 7, 8 pour faire fluer la matière des roues polaires et réaliser un assemblage par sertissage de manière décrite ci-après.

Suivant une caractéristique ce tronçon intermédiaire de l'arbre 3 présente, d'une part, deux zones moletées, dites zones de sertissage, destinées à être assemblées avec le rotor à griffes par déformation locale de matière de ce rotor à griffes, et d'autre part, une zone de centrage. Les zones de sertissage sont disposées de part et d'autre de la zone de centrage et la zone de centrage est radialement saillante par rapport aux zones de sertissage.

Les zones de sertissage sont également saillantes radialement par rapport au tronçon 32 de plus grande taille radiale de l'extrémité avant de l'arbre

Plus précisément la zone de centrage est dédiée au centrage des roues polaires du rotor à griffes, tandis que les zones de sertissage sont dédiées chacune à la fixation de la roue polaire concernée du rotor à griffes.

Dans les figures 3 et 4 on voit en 54 la zone de centrage et en 61 et 62 des gorges, respectivement avant et arrière, qui raccordent les extrémités axiales avant et arrière de la zone de centrage 54 aux zones de sertissage respectivement avant et arrières décrites ci-après. Chaque zone de sertissage est donc séparée de la zone de centrage par un moyen de séparation, tel qu'une gorge, pour préserver la zone de centrage et dégager l'outil de formation des zones moletées. La profondeur du moyen de séparation dépend de la profondeur des zones moletées des zones de sertissage.

Dans les figures 3 et 4 les gorges de séparation 61, 62 sont de section circulaire. Bien entendu cela dépend des applications, la section des gorges pouvant être autre que circulaire.

Ces gorges n'affectent pas outre mesure la rigidité et la résistance mécanique de l'arbre

En liaison avec les figures 5 et 6, on voit qu'ici chaque zone de sertissage est destinée à coopérer localement avec l'une des roues polaires.

La zone de centrage 54 est ici lisse.

Dans ces figures la zone de centrage est entièrement lisse.

En variante la zone de centrage est fractionnée en au moins deux portions lisses de centrage séparées l'une de l'autre par une rainure.

Par exemple, dans un mode de réalisation, la zone de centrage comporte à chacune de ses extrémités axiales et centralement une portion lisse de centrage séparées axialement les unes des autres par deux rainures, chaque rainure étant implantée entre la portion centrale lisse et l'une des portions lisse d'extrémité.

Cette zone 54 est dans ces modes de réalisation de forme cylindrique à section circulaire.

Les zones de sertissage sont également de section circulaire.

Le diamètre externe D1 de la zone de centrage 54 est supérieur au diamètre externe D2 des zones de sertissage en sorte que la zone de centrage 54 est radialement saillante par rapport aux zones de sertissage.

Cette zone 54 présente une longueur axiale L1 supérieure à celle de chaque zone de sertissage, ces zones étant également de forme cylindrique.

Les zones de sertissage, de manière précitée et suivant une caractéristique, s'étendent en saillie radiale par rapport au tronçon 32 radialement de plus grande taille de l'extrémité avant de l'arbre 3.

Ainsi dans les modes de réalisation des figures 3 et 4, le diamètre D1 de la zone de centrage 54 est supérieur au plus grand diamètre D3 de l'extrémité avant 32, 31 de l'arbre 3 et donc également à celui de l'extrémité arrière 13 de l'arbre 3.

Suivant une caractéristique, le diamètre D2 est également supérieur au diamètre D3.

Ici c'est le deuxième tronçon 32 qui présente le diamètre D3 supérieur à celui du premier tronçon fileté 31.

Ainsi l'arbre des figure 3 et 4 présente un tronçon intermédiaire radialement de plus grande taille que l'extrémité avant de l'arbre 3 en sorte qu'il est plus robuste que l'arbre du document DE 30 08 454.

En outre l'usinage des zones de sertissage est plus facile à réaliser puisque le diamètre D2 des zones de sertissage est supérieur au diamètre D3, correspondant ici au diamètre du deuxième tronçon 32.

Ce deuxième tronçon 32 de montage du roulement 19 est ménagé lorsque l'on monte l'arbre dans les roues polaires du fait que les diamètres D1 et D2 sont supérieurs au diamètre D3.

La zone de centrage 54 protège également les zones de sertissage.

Dans ces figures les zones de sertissage arrière 156, 256, adjacentes à l'extrémité arrière 13 de l'arbre 3, ont axialement une longueur L4 identique inférieure à la longueur L1 de la zone 54.

Les zones de sertissage avant 150,250, adjacentes à l'extrémité avant 31, 32 de l'arbre 3, ont ici axialement une longueur différente de celle des zones de sertissage arrière 156,256.

Dans le mode de réalisation de la figure 3 la zone de sertissage arrière 156, de longueur axiale L4, comporte une gorge de sertissage 55 délimitée axialement d'une part, par une collerette 57 de raccordement au cinquième tronçon 232 de l'extrémité arrière 13 de l'arbre 3 et d'autre part, par une zone moletée 56 de diamètre D2 raccordée, via la gorge de séparation 62, à l'extrémité axiale arrière de la zone de centrage 54.

Les stries de la zone moletée 56, réalisées à la périphérie externe de l'arbre 3, sont d'orientation axiale et parallèles à l'axe X-X de l'arbre 3. La longueur axiale L3 de cette zone 56 est inférieure à la longueur axiale L4 de la zone 156 à cause de la présence de la gorge 55.

Le diamètre du fond de la gorge 55 est supérieur au diamètre du quatrième tronçon 232 en sorte que la rigidité et la résistance mécanique de l'extrémité arrière de l'arbre n'est pas modifiée.

La zone de sertissage avant 150 a axialement une longueur L2 supérieure à la longueur L4 de la zone 156 et inférieure à la longueur L1 de la zone 54. Cette zone de sertissage 150 se raccorde à l'extrémité avant de la zone de centrage 54 par l'intermédiaire de la gorge de séparation 61. Cette zone avant 150 est une zone moletée de diamètre D2, dont les stries, réalisées à la périphérie externe de l'arbre 3, sont d'orientation axiale et parallèles à l'axe X-X de l'arbre 3.

La zone 150 est scindée en deux parties 50, 52 séparées l'une de l'autre par une gorge de sertissage 51.

La longueur axiale de la partie 50 est supérieure à la longueur axiale L3 de la zone moletée 56, elle-même supérieure à la longueur axiale de la partie 52.

Cette partie moletée 52 est emmanchée à force dans l'alésage interne de l'entretoise 159 de la figure 1. L'entretoise 159 est donc bloquée en rotation par cette partie moletée 52, qui pénètre partiellement dans celle-ci comme à la figure 1.

Suivant une caractéristique les gorges de sertissage 51, 55 sont plus profondes que les gorges de séparation 61, 62, en sorte que le diamètre du fond des gorges 61,62 est supérieur à celui du fond des gorges de sertissage comme visibles dans les figures 3, 4, 9, 9A, 9B, 9C.

Ainsi la profondeur des gorges 55, 51 de sertissage est supérieure à la profondeur des stries de la zone moletée 156, 150. Ces gorges sont adjacentes respectivement à la zone 156 et à la partie 50.

A la figure 4 on voit que l'arbre 3 présente également une partie moletée 152 à strie d'orientation axiale pour réaliser la même fonction de blocage en rotation de l'entretoise 159.

La matière des roues polaires 7,8 est destinée à pénétrer par fluage de matière, suite à une opération de sertissage décrite ci-après et visible dans les figures les figures 9, 9A, 9B, radialement dans les gorges de sertissage respectivement 51, 55 pour remplir celles-ci et en partie axialement et radialement respectivement dans la partie moletée 50 et dans la zone moletée 56. Ainsi chaque roue polaire est bloquée axialement par les gorges 51, 55 et en rotation par la partie moletée 50 de la zone 150 et par la zone moletée 56 de la zone 156.

On obtient ainsi une solidarisation de l'arbre avec les roues polaires grâce aux zones de sertissage 150, 156.

Dans le mode de réalisation de la figure 4 il n'est pas prévu de gorge de sertissage et les zones de sertissage sont constituées par une zone moletée de sertissage arrière 256, de même longueur axiale L4 que la zone 156, et par une zone moletée de sertissage avant 250 ici de longueur axiale L5 inférieure à la longueur L4.

La zone de centrage 54 et les gorges 62, 61 sont inchangées.

On notera que la longueur axiale de l'ensemble formé par la zone 250, la partie moletée 152 précitée et la gorge 151 de raccordement de la zone 250 à la partie 152, est égale à la longueur L2 de la zone 150 de la figure 3.

Ici la gorge 151 est plus courte axialement que la gorge 51 de la figure 3 en sorte que la zone 250 à une longueur L5 supérieure à celle de la partie 50.

Les zones moletées de sertissage 256, 250 sont à stries croisées.

Plus précisément les stries, réalisées à la périphérie externe de l'arbre 3, sont inclinées dans un sens et le sens inverse en sorte que ces stries se croisent.

Les zones moletées 256, 250 sont plus facile à réaliser que les zones 156, 150 de la figure 3 et donc moins coûteuses.

Lors de l'opération de sertissage la matière des roues polaires 7, 8 pénètre dans ces stries croisées en sorte que l'on obtient un blocage axiale et en rotation des roues polaires 7, 8 sur l'arbre 3 et ce de manière simple sans gorge de sertissage. La pénétration de la matière des roues polaires 7, 8 dans les stries croisées est plus aisée.

On notera également que dans la figure 4 on supprime la collerette 57 de la figure 3, la partie arrière 13 de l'arbre 3 étant raccordée à la zone 256 par un chanfrein de forme plus simple que l'arrondi de raccordement de la collerette 57 à la partie arrière 13.

Bien entendu on peut combiner les deux modes de réalisation et remplacer une zone de sertissage d'un mode de réalisation par une zone de sertissage de l'autre mode de réalisation compte tenu de l'égalité des longueurs L4 et L2. Par exemple à la figure 3 on peut remplacer la zone 156 par la zone 256 de la figure 4. En variante, comme visible à la figure 10 on peut conserver la collerette 57 et la gorge 55.

Dans tous les cas on déforme localement les roues polaires et ce plastiquement.

On notera que dans ces figures 3 et 4 que la longueur L1 est supérieure à la somme des longueurs L2+L4

La différence entre les diamètres D1 et D2 varie en fonction des applications. Elle est avantageusement faible pour réduire les efforts de sertissage à l'aide d'outils décrits ci-après.

Cette valeur est comprise par exemple entre 0,1 et 1 mm.

Ainsi qu'il ressort de la description lors de l'assemblage de l'arbre avec les roues 7, 8 on enfile l'extrémité avant 31, 32 de l'arbre 3 dans l'extrémité arrière du rotor 2 pour arriver dans les configurations visibles dans les figures 5 et 6 avant l'opération de sertissage.

Dans ces deux modes de réalisation on usine par avance l'alésage interne des roues polaires et par avance le diamètre extérieur des roues polaires, c'est à dire la périphérie externe des dents, pour avoir une bonne concentricité entre les roues polaires et l'arbre et obtenir l'entrefer voulu entre le rotor et le stator de la machine. Cela est rendu possible grâce à la zone de centrage 54 en contact intime par sa périphérie externe avec la périphérie interne des roues polaires délimitée par les alésages centraux, ici cylindriques, des roues polaires.

On obtient ainsi à la faveur de ce contact intime un ajustement de centrage entre le diamètre des alésages centraux et le diamètre de la zone de centrage.

Ces usinages sont réalisés à l'aide d'outils lubrifiés sans risque de projection de copeaux chauds sur le bobinage 10 de la figure 1 puisque ce bobinage n'est pas présent à ce stade.

Cela permet également, si désiré pour augmenter la puissance de la machine, d'usiner des rainures ou gorges axiales dans au moins une face latérale d'au moins certaines dents 9 de la figure 1 ou 2 pour le montage d'aimants permanents entre les dents à l'aide d'une fraise comme décrit dans le brevet FR 2 793 085.

Le diamètre de cette fraise n'est pas limité puisque à ce stade les roues polaires ne sont pas encore assemblées ensembles. Il en est de même de la profondeur des rainures.

Les gorges peuvent être débouchantes ou non débouchantes. Cela permet de monter des aimants permanents de longueur différente.

La fraise peut être lubrifiée.

D'une manière générale la lubrification des outils permet d'augmenter la durée de vie de ceux-ci.

Ensuite on monte le bobinage 10 sur le noyau de la figure 1 constituées de deux demi noyaux appartenants chacun au flasque d'une roue polaire. Puis, notamment pour un bon passage du flux magnétique, à l'aide d'une presse de compactage on presse l'une contre l'autre les roues polaires via les demi noyaux, ici monoblocs avec les flasques des roues polaires.

Ensuite on emmanche l'arbre 3 dans les alésages interne centraux des roues polaires. On effectue également le positionnement angulaire d'une roue par rapport à l'autre notamment à l'aide de doigts interposés de manière temporaire entre les saillies des griffes de la roue polaire concernée et ce pendant l'opération de compactage ou de pressage.

En considérant la figure 2, on monte les aimants dans une gorge débouchante ou non débouchante de l'une des dents d'une roue polaire, puis on amène l'autre roue polaire, qui par magnétisme prendra la bonne position.

Le montage de l'arbre dans l'alésage des roues polaire ne détruira pas ce positionnement du fait que c'est la zone de centrage 54, qui est emmanchée dans cet alésage. Il en est de même lorsqu'il n'y a pas d'aimants, le positionnement angulaire n'étant pas détruit.

La zone 54 permet également une protection des tronçons 32 et 132 de montage des roulements. Ces tronçons ne sont pas endommagés lorsque l'on enfile l'arbre 3, par son extrémité avant, dans l'alésage central des roues polaires.

A la figure 5 on voit la position finale de l'arbre après cet emmanchement.

Ainsi on voit en 83 le flasque transversal de la roue polaire arrière, en 86 l'alésage central interne et cylindrique de la roue polaire arrière 8 et en 84 le demi noyau de cette roue 8 présentant une face externe 81, tournée vers le palier arrière 17 de la figure 1, et une face interne 82 constituée par l'extrémité libre du demi noyau 84.

De même on voit en 73 le flasque transversal de la roue polaire avant, en 76 l'alésage centrale interne et cylindrique de la roue polaire avant 7 et en 74 le demi noyau de cette roue 7 présentant une face externe 71, tournée vers le palier arrière 16 de la figure 1, et une face interne 72 constituée par l'extrémité libre du demi noyau 74. Les demi noyaux 74, 84 sont implantés à la périphérie interne des flasques 73, 83 des roues polaires 7, 8.

Les faces 71 et 81 constituent respectivement la face frontale avant et la face dorsale arrière du rotor 2 et sont d'orientation transversale par rapport à l'axe X-X de l'arbre 3. Les faces 71, 81 constituent donc les faces d'extrémité axiale du rotor 2.

Les faces 72 et 82 sont également d'orientation transversale par rapport à l'axe X-X et sont destinées à venir en butée l'une contre l'autre comme visible dans cette figure 5 pour assurer de manière précitée le passage du flux magnétique.

L'alésage interne des roues polaires 7, 8, ici cylindrique, a une forme complémentaire à celui de la zone de centrage 54.

Plus précisément la périphérie externe de la zone de centrage est en contact intime avec le bord des alésages 82, 76, c'est-à-dire avec la périphérie interne des roues polaires, tandis que la zone moletée 56 et les parties moletées 50, 52 n'interfèrent pas lors de cette étape avec les bords de ces alésages 86, 76 du fait que le diamètre D1 de la zone de centrage 54 est supérieur au diamètre D2 de cette zone moletée 56 et de ces parties moletées 50,52.

Les contraintes mécaniques sont donc minimes à ce stade par rapport à l'emmanchement à force de l'état de la technique. De plus on obtient de manière précitée une bonne concentricité en sorte que la périphérie externe des roues peut être usinée par avance. Dans la figure 5 on a représenté dans la partie basse des sillons 91 que l'on peut également réaliser par avance de manière optionnelle à la périphérie externe des dents pour diminuer les courants de Foucault. Ces sillons 91 sont dans un mode de réalisation de forme hélicoïdale. On notera que la collerette 57 présente un diamètre légèrement supérieur à celui de la zone moletée 56 en sorte que cette collerette vient en contact avec la roue polaire 8 ce qui permet de limiter le mouvement relatif de l'arbre par rapport aux roues et de bien positionner axialement celui-ci. Il en est de même avec l'arbre de la figure 10. La collerette 57 est donc une simple collerette de positionnement et non de reprise d'effort en sorte qu'elle est de faible épaisseur. Son diamètre est voisin de celui du diamètre D1 en étant légèrement supérieur à celui-ci pour pouvoir prendre appui sur la face externe 81 de la roue 8.

Cette collerette 57, de faible épaisseur, est implantée axialement entre le collecteur 100 et la zone de sertissage 156 comme visible à la figure 5. Pour ce faire la face 81 présente centralement un dégagement, non référencé, comme visible également à la figure 8.

Suivant une caractéristique les déformations locales du rotor à griffes sont générées à l'aide d'un outil de sertissage.

Les roues 7, 8 présentent localement chacune une empreinte, respectivement 75, 85, de forme annulaire.

Ces empreintes sont réalisées, dans un premier mode de réalisation, par avance comme visible dans les figures 5, 6, 7, dans les faces d'extrémité axiale des roues polaires, c'est-à-dire dans les faces externes 81, 71 des flasques des roues polaires.

Ces empreintes sont destinées à la réception de l'outil de sertissage 185, qui est déplacé axialement en étant soumis à un effort de pression pour réaliser l'opération de sertissage.

En variante comme visible dans les figures 9, 9A, 9B c'est l'outil de sertissage lui-même qui crée les empreintes.

Les empreintes 75, 85 sont donc des empreintes de sertissage.

Cet outil a une forme tubulaire.

On a représenté cet outil dans les figures 7, 8, 9, 9A et 9B car celui-ci a une forme spéciale.

En effet l'outil comporte un dégagement 190 pour ne pas interférer avec les branches 102 du collecteur 100, plus précisément avec les tronçons courbés de raccordement des branches à l'anneau 101.

De l'autre côté du rotor, c'est-à-dire au niveau de la face 71, l'outil de sertissage n'a pas besoin d'un tel dégagement. Dans tous les cas l'outil 185 tubulaire comporte à l'avant une extrémité libre 187 annulaire conformée en bord d'attaque pour pénétrer dans l'empreinte 75, 85 concernée ou pour former cette empreinte.

Cette extrémité avant comporte intérieurement une face 186 de forme tronconique et extérieurement une face externe 188 également de forme tronconique raccordée à la face interne 186 par une extrémité arrondie 189 comme mieux visible à la figure 9A.

En considérant l'extrémité avant de l'outil, destinée à coopérer avec la roue polaire 7, 8 concernée, on voit que la face 186 est divergente à l'avant vers l'extérieur de l'outil, c'est-à-dire évasée, tandis que la face 188 est inclinée en sens inverse et converge à l'avant vers le centre de l'outil.

Les empreintes 75, 85,de forme complémentaire à celle de l'outil 185, comportent chacune, comme mieux visible à la figure 9B, un bord inférieur 286, raccordé par une portion de forme arrondie 289 à un bord supérieur 288. Les bords 286, 288 ont une forme complémentaire à celle des faces 186, 188 raccordées par entre elles via une extrémité de forme arrondie 289 que présente l'extrémité libre de l'outil 185. Le bord 286, de forme tronconique, est incliné en direction de l'axe X-X et est convergent vers cet axe à l'extérieur du rotor 2, tandis que le bord 288 est divergent à l'extérieur du rotor.

La coopération de l'outil 185 avec l'empreinte 85 est mieux visible à la figure 9A.

L'outil 185 est déplacé axialement en étant soumis à une force de pression et fait fluer la matière, ici de la roue polaire arrière 8, axialement et radialement vers l'intérieur compte tenu de l'inclinaison de la face 186 et du bord 286, et ce avec une déformation plastique de la matière.

On voit à la figure 9B le résultat final, la matière fluant radialement dans la gorge 55 et radialement et axialement vers l'intérieur dans la zone moletée 56 en sorte que l'on obtient un blocage en rotation, via la zone moletée 56, et en translation, via la gorge 55.

Il en est de même pour la zone de sertissage avant 150, la matière de la roue polaire 7, sous l'action du déplacement axial de l'outil de sertissage engagé dans l'empreinte 85, fluant radialement intérieurement dans la gorge 51 et radialement et axialement intérieurement dans la zone moletée 50 en sorte que l'on obtient un blocage en rotation, via la parie moletée 50, et en translation, via la gorge 51.

A la figure 6 on obtient la même chose, le déplacement axial de l'outil engagé, respectivement dans l'empreinte 85 et dans l'empreinte 75 engendrant un fluage de matière axial et radial intérieurement dans respectivement la zone de sertissage 256 et dans la zone de sertissage 250. Ces zones étant à stries croisées, on obtient un blocage en translation et en rotation des roues polaires avec l'arbre 3.

On notera que l'extrémité libre 187 de l'outil est réalisée à la faveur d'un changement de diamètre délimité par un épaulement transversal 184 (figure 9A). Cette extrémité 187 étant d'épaisseur réduite par rapport à la partie principale 183 de l'outil de diamètre intérieur supérieur à celui de la collerette 57.La face arrière de cet outil est soumise à l'action d'un élément presseur pour déformer localement, par l'intermédiaire de son extrémité libre 187, la roue polaire concernée.

Dans la figure 9A, lorsque c'est l'outil qui crée l'empreinte, on obtient en réalité deux secteurs annulaires de fluage de la matière de l'extrémité axiale 81 de la roue polaire 8 à cause du dégagement 190 de l'outil pour les bras du collecteur.

Il en est de même au niveau de la face 71 lorsque l'on utilise le même outil.

En variante, au niveau de la face d'extrémité axiale 71, l'outil 185 est dépourvu d'un tel dégagement en sorte que l'on obtient un anneau continu de fluage de matière.

Les empreintes peuvent donc être fractionnées en deux secteurs annulaires.

Bien entendu, en variante on peut fractionner l'extrémité libre 187 en plusieurs secteurs annulaires.

L'angle c (figure 9A) de la face 186 est compris dans ce mode de réalisation entre 20° et 45°, avantageusement entre 30° et 38°.

L'angle de la face tronconique 188 est faible. Cet angle est compris par exemple entre 1° et 5°

Bien entendu la valeur de ces angles dépend des applications.

On notera que dans la figure 8 le ventilateur arrière 24 de la figure 1 n'est pas encore monté et que le diamètre interne de ce ventilateur est supérieur à celui de l'anneau 101.

D'une manière générale les empreintes 75, 85 de sertissage sont implantées à l'intérieur du trou central du ventilateur concerné en sorte que ceux-ci ne sont pas modifiés.

Ces empreintes 75, 85 sont proches de la périphérie interne des roues polaires 7, 8. Elles sont implantées radialement au dessus des zones de sertissage en étant voisines de celle-ci.

La présente invention conserve également la configuration des roues polaires, seul l'alésage interne cylindrique de celles-ci est modifié.

Le collecteur 100, l'entretoise 159 et les parties avant et arrière de l'arbre sont également conservées.

Bien entendu en variante l'extrémité arrière de l'arbre peut être modifiée car on enfile l'extrémité avant de l'arbre 3 dans l'alésage des roues polaires.

Cette extrémité arrière peut donc avoir radialement une taille supérieure ou égale çà celle de l'extrémité avant. Dans tous les cas la taille radiale de la portion intermédiaire est supérieure à celle de la partie avant.

Bien entendu la présente invention n'est pas limitée aux exemples de réalisation décrits.

Ainsi l'alternateur peut être sans balais comme décrit par exemple dans le document FR 2 744 575, auquel on se reportera.

Dans ce cas le palier arrière a une forme profonde et le rotor à griffes est constitué par une roue polaire principale étagée et par une roue polaire en porte à faux, qui sont fixées entre elles par un anneau en matériau amagnétique. Cet anneau relie entre elles les dents imbriquées des deux roues polaires.

Le noyau est fixe et est fixé sur la face arrière du palier avant formant couvercle pour le palier arrière.

Une des roues polaire est donc dépourvue de flasque, tandis que l'autre roue polaire principale est assemblée avec l'arbre selon l'invention, les zones de sertissage étant implantées chacune à une extrémité axiale de la roue polaire principale.

A la lumière de ce document on voit que les composants électroniques peuvent être portés par le palier avant et qu'un unique ventilateur peut être monté à l'extrémité arrière de l'arbre.

En variante l'alternateur constitue l'alternateur d'excitation d'un ralentisseur électromagnétique.

Dans ce cas, comme décrit dans le document WO 2004/017502 auquel on se reportera, il suffit d'inverser les structures comme mentionné dans ce document.

Dans les exemples de réalisation la longueur axiale des zones de sertissage est inférieure à l'épaisseur des flasques 73, 83 des roues polaires. Bien entendu cela dépend des applications.

On notera que les zones de sertissage sont axialement de plus grande longueur que celles du document DE 300 84 54.

Dans un mode de réalisation un noyau intermédiaire peut être implanté entre les deux roues polaires en étant distinct de celles-ci.

Par exemple à la figure 5 on peut raccourcir axialement les demi noyaux 74, 84 et placer entre ceux-ci un noyau intermédiaire distinct.

Ce noyau sera centré, ainsi que les roues polaire, par la zone de centrage.

Cette zone de centrage n'est pas forcément lisse.

En variante elle présente par exemple en saillie des points ou des zones de contact, par exemple formées à la faveur de sillon pour contact avec le bord des alésages.

D'une manière générale la taille radiale de l'alésage interne correspond à celle de la zone de centrage pour avoir un contact intime de centrage.

On obtient un ajustement entre l'arbre et la roue polaire principale ou les roues polaires

Ainsi dans les figures 3 à 6 le diamètre interne de l'alésage 76, 86 des demi noyaux 74, 84 est ajusté au diamètre D1 de la zone de centrage 54.

On appréciera que la résistance mécanique de l'arbre selon l'invention est supérieure à la résistance mécanique de l'arbre du document DE 300 84 54 car dans la présente invention le diamètre D2 des zones de sertissage est inférieur au diamètre D1 de la zone de centrage et est supérieur au plus grand diamètre D3 de l'extrémité avant 31, 32 de l'arbre 3, tandis que dans le document DE 300 84 54 le plus grand diamètre de l'extrémité avant de l'arbre est supérieur au diamètre D2 des zones de sertissage.

En outre dans le document DE 300 84 54 le plus grand diamètre de la partie lisse de l'arbre est constant en sorte que les zones de montage des roulements risquent d'être endommagées lors du montage des roues polaires sur l'arbre.

Dans la présente invention cela ne se produit pas puisque un jeu radial existe entre les alésages centraux des roues polaires et le plus grand diamètre D3 de l'extrémité avant de l'arbre, sachant que l'on enfile l'extrémité avant de l'arbre dans l'extrémité arrière du rotor à griffes.

Dans le document DE 300 84 54 les usures mécaniques des bagues collectrices, en contact avec les balais du porte-balais, sont plus importantes puisque le plus grand diamètre de la partie lisse de l'arbre est constant, tandis que grâce à l'invention, de manière précitée, l'extrémité arrière de l'arbre est de diamètre réduit en sorte que le diamètre des bagues collectrices est réduit ainsi que les usures mécaniques.

Grâce à l'invention on augmente la longueur axiale des zones de sertissage par rapport à celles du document DE 300 84 54, tout en ayant une zone de centrage de grande longueur axiale.

On obtient ainsi une bonne concentricité de l'assemblage des roues polaires avec l'arbre tout en ayant un assemblage robuste et fiable des roues polaires avec l'arbre.

L'usinage des zones de sertissage est plus aisée et plus économique que celui des zones de sertissage du document DE 300 84 54.

Les efforts de sertissage sont également réduits.

On appréciera qu'une zone de sertissage sous la forme d'une zone moletée à stries croisées est d'un coût réduit et permet une meilleur tenue axiale de l'assemblage des roues polaires avec l'arbre du fait que l'on obtient une bonne pénétration de la matière de la roue polaire concernée dans les stries.

Grâce à la zone de centrage saillante on obtient une bonne concentricité entre les roues polaires et l'arbre.

## Revendications

1. Arbre (3) de rotor à griffes (2) comportant une extrémité avant destinée à porter un organe d'entraînement et dotée de plusieurs tronçons (31,32), une extrémité arrière et un tronçon intermédiaire de support et de fixation du rotor à griffes présentant, d'une part, deux zones moletées (150, 156-250, 256), dites zones de sertissage, destinées à être assemblées avec le rotor à griffes (2) par déformation locale de matière du rotor à griffes (2), et d'autre part, une zone de centrage (54) destinée à centrer le rotor à griffes et disposée entre les zones de sertissage (150, 156 - 250, 256), ladite zone de centrage s'étendant en saillie radiale par rapport au zones de sertissage , **caractérisé en ce que** les zones de sertissage (150, 156 - 250, 256) s'étendent en saillie radiale par rapport au tronçon (32) radialement de plus grande taille de l'extrémité avant de l'arbre (3).

2. Arbre selon la revendication 1, **caractérisé en ce que** chaque zone de sertissage (150, 156 - 250, 256) est séparée de la zone de centrage (54) par une gorge de séparation (61, 62).

3. Arbre selon la revendication 1 ou 2, **caractérisé en ce que** l'une (150, 250) des zones de sertissage est scindée en deux parties (50,52) séparées par une gorge de sertissage (51, 151).

4. Arbre selon l'une quelconque de revendication précédentes, **caractérisé en ce que** l'une des zones de sertissage (156, 256) est délimitée par une collerette destinée à venir en appui sur le rotor à griffes (2)

5. Arbre selon l'une quelconque des revendications précédentes, **caractérisé en ce que** l'une au moins des zones de sertissage (150, 156) comporte une zone moletée (56, 150) et une gorge de sertissage (55, 51, 151).

6. Arbre selon la revendication 5, prise en combinaison avec la revendication 2, **caractérisée en ce que** la ou les gorges de sertissage (51, 55) et les gorges de séparation (61, 62) sont de section circulaire et **en ce que** le diamètre du fond des gorges de séparation (61, 62) est supérieur au diamètre du fond de la ou les gorges de sertissage (51, 55).

7. Arbre selon l'une quelconque des revendications précédentes, **caractérisé en ce que** l'une au moins des zones de sertissage (250) comporte une zone moletée à stries croisées et **en ce que** ladite zone moletée est raccordée à une partie moletée (152) à stries d'orientation axiale par l'intermédiaire d'une gorge de raccordement (151).

8. Arbre selon l'une quelconque des revendications précédentes, **caractérisé en ce que** la zone de centrage (54) présente une longueur axiale (L1) supérieure à celle de chaque zone de sertissage (150, 156 - 250, 256).

9. Arbre selon l'une quelconque des revendications précédentes, **caractérisé en ce que** la zone de centrage (54), les zones de sertissage (150, 156-250, 256) et le tronçon (32) radialement de plus grande taille de l'extrémité avant de l'arbre (3) sont de section circulaire, **en ce que** le diamètre (D1) de la zone de centrage (54) est supérieur à celui (D2) des zones de sertissage ((150, 156 - 250, 256) et **en ce que** le diamètre (D2) des zones de sertissage ((150, 156 - 250, 256) est supérieure au diamètre (D3) du tronçon (32) radialement de plus grande taille de l'extrémité avant de l'arbre (3).

10. Rotor à griffes, **caractérisé en ce qu'**il est équipé à fixation d'un arbre selon l'une quelconque des revendications précédentes.

11. Rotor selon la revendication 10, **caractérisé en ce qu'**il comporte une empreinte de sertissage (75, 85) à chacune de ses extrémités axiales (71, 81).

12. Rotor selon la revendication 11, **caractérisé en ce que** l'une (85) au moins des empreintes (75, 85) est fractionnée en au moins deux secteurs annulaires.

13. Rotor selon l'une quelconque des revendications 10 à 12, **caractérisé en ce que** les empreintes sont délimitées par un bord inférieur (286) incliné vers l'axe X-X de l'arbre (3).

14. Rotor selon l'une quelconque des revendications 10 à 13, **caractérisé en ce qu'**il comporte deux roues polaires (7, 8) comportant chacune un flasque portant à sa périphérie externe une pluralité de dents (9) et à sa périphérie interne un demi noyau (74, 84) et **en ce que** les demi noyaux (74, 84) sont juxtaposés.

15. Rotor selon la revendication 14, **caractérisé en ce qu'**il comporte des aimants permanents montés entre les dents des roues polaires.

16. Machine électrique tournante, **caractérisé en ce qu'**elle est équipée d'un rotor à griffes selon l'une quelconque des revendications 10 à 15.

17. Machine électrique tournante selon la revendication 16, **caractérisé en ce qu'**elle consiste en un alternateur ou en un alterno-démarreur.

## Claims

1. Shaft (3) of a toothed rotor (2) comprising a front end designed to support a driving member and furnished with several sections (31, 32), a rear end and an intermediate section for supporting and attaching the toothed rotor having, on the one hand, two knurled zones (150, 156-250, 256), called crimping zones, designed to be assembled with the toothed rotor (2) by local deformation of material of the toothed rotor (2), and, on the other hand, a centring zone (54) designed to centre the toothed rotor and placed between the crimping zones (150, 156-250, 256), the said centring zone protruding radially relative to the crimping zones, **characterized in that** the crimping zones (150, 156-250, 256) protrude radially relative to the section (32) of radially greater size of the front end of the shaft (3).

2. Shaft according to Claim 1, **characterized in that** each crimping zone (150, 156-250, 256) is separated from the centring zone (54) by a separation groove (61, 62).

3. Shaft according to Claim 1 or 2, **characterized in that** one (150, 250) of the crimping zones is split into two portions (50, 52) separated by a crimping groove (51, 151).

4. Shaft according to any one of the preceding claims, **characterized in that** one of the crimping zones (156, 256) is delimited by a collar designed to rest on the toothed rotor (2).

5. Shaft according to any one of the preceding claims, **characterized in that** at least one of the crimping zones (150, 156) comprises a knurled zone (56, 150) and a crimping groove (55, 51, 151).

6. Shaft according to Claim 5, taken in combination with Claim 2, **characterized in that** the crimping groove or grooves (51, 55) and the separation grooves (61, 62) are of circular section and **in that** the diameter of the bottom of the separation grooves (61, 62) is greater than the diameter of the bottom of the crimping groove or grooves (51, 55).

7. Shaft according to any one of the preceding claims, **characterized in that** at least one of the crimping zones (250) comprises a knurled zone with crossed flutes and **in that** the said knurled zone is connected to a knurled portion (152) with flutes of axial orientation by means of a connecting groove (151).

8. Shaft according to any one of the preceding claims, **characterized in that** the centring zone (54) has an axial length (L1) greater than that of each crimping zone (150, 156-250, 256).

9. Shaft according to any one of the preceding claims, **characterized in that** the centring zone (54), the crimping zones (150, 156-250, 256) and the section (32) of radially larger size of the front end of the shaft (3) are of circular section, **in that** the diameter (D1) of the centring zone (54) is greater than that (D2) of the crimping zones (150, 156-250, 256) and **in that** the diameter (D2) of the crimping zones (150, 156-250, 256) is greater than the diameter (D3) of the section (32) of radially larger size of the front end of the shaft (3).

10. Toothed rotor, **characterized in that** it is equipped by means of fastening with a shaft according to any one of the preceding claims.

11. Rotor according to Claim 10, **characterized in that** it comprises a crimping recess (75, 85) at each of its axial ends (71, 81).

12. Rotor according to Claim 11, **characterized in that** at least one (85) of the recesses (75, 85) is divided into at least two annular sectors.

13. Rotor according to any one of Claims 10 to 12, **characterized in that** the recesses are delimited by a bottom edge (286) that is inclined towards the axis X-X of the shaft (3).

14. Rotor according to any one of Claims 10 to 13, **characterized in that** it comprises two magnetic wheels (7, 8) each comprising a flange supporting on its outer periphery a plurality of teeth (9) and on its inner periphery a half-core (74, 84) and **in that** the half-cores (74, 84) are juxtaposed.

15. Rotor according to Claim 14, **characterized in that** it comprises permanent magnets mounted between the teeth of the magnetic wheels.

16. Rotary electrical machine, **characterized in that** it is equipped with a toothed rotor according to any one of Claims 10 to 15.

17. Rotary electrical machine according to Claim 16, **characterized in that** it consists in an alternator or in an alternator/starter.

## Patentansprüche

1. Läuferwelle (3) mit Klauen (2), die ein mit mehreren Abschnitten (31, 32) versehenes vorderes Ende zum Tragen eines Antriebsglieds, ein hinteres Ende und einen Zwischenabschnitt zum Abstützen und Befestigen des Klauenläufers aufweist, der einerseits zwei gerändelte Zonen (150, 156 - 250, 256), so genannte Quetschzonen, die durch lokale Verformung des Materials des Klauenläufers (2) mit dem Klauenläufer (2) montiert werden sollen, und andererseits eine Zentrierzone (54), die den Klauenläufer zentrieren soll und zwischen den Quetschzonen (150, 156 - 250, 256) angeordnet ist, aufweist, wobei die Zentrierzone radial bezüglich der Quetschzonen vorragt, **dadurch gekennzeichnet, dass** die Quetschzonen (150, 156 - 250, 256) bezüglich des radial größere Abmessungen aufweisenden Abschnitts (32) des vorderen Endes der Welle (3) radial vorragen.

2. Welle nach Anspruch 1, **dadurch gekennzeichnet, dass** jede Quetschzone (150, 156 - 250, 256) durch eine Trennnut (61, 62) von der Zentrierzone (54) getrennt ist.

3. Welle nach Anspruch 1 oder 2, **dadurch gekennzeichnet, dass** eine (150, 250) der Quetschzonen in zwei Teile (50, 52) geteilt ist, die durch eine Quetschnut (51, 151) getrennt sind.

4. Welle nach einem der vorhergehenden Ansprüche, **dadurch gekennzeichnet, dass** eine der Quetschzonen (156, 256) durch einen Kragen, der an dem Klauenläufer (2) in Anlage kommen soll, begrenzt ist.

5. Welle nach einem der vorhergehenden Ansprüche, **dadurch gekennzeichnet, dass** mindestens eine der Quetschzonen (150, 156) eine gerändelte Zone (56, 150) und eine Quetschnut (55, 51, 151) aufweist.

6. Welle nach Anspruch 5, in Kombination mit Anspruch 2, **dadurch gekennzeichnet, dass** die Quetschnut(en) (51, 55) und die Trennnuten (61, 62) einen kreisförmigen Querschnitt aufweisen und der Durchmesser des Grunds der Trennnuten (61, 62) größer ist als der Durchmesser des Grunds der Quetschnut(en) (51, 55).

7. Welle nach einem der vorhergehenden Ansprüche, **dadurch gekennzeichnet, dass** mindestens eine der Quetschnuten (250) eine gerändelte Zone mit gekreuzten Riefen aufweist und die gerändelte Zone durch eine Verbindungsnut (151) mit einem gerändelten Teil (152) mit axial ausgerichteten Riefen verbunden ist.

8. Welle nach einem der vorhergehenden Ansprüche, **dadurch gekennzeichnet, dass** die Zentrierzone (54) eine axiale Länge (L1) aufweist, die größer ist als die jeder Quetschzone (150, 156 - 250, 256).

9. Welle nach einem der vorhergehenden Ansprüche, **dadurch gekennzeichnet, dass** die Zentrierzone (54), die Quetschzonen (150, 156 - 250, 256) und der radial größere Abmessungen aufweisende Abschnitt (32) des vorderen Endes der Welle (3) einen kreisförmigen Querschnitt aufweisen, der Durchmesser (D1) der Zentrierzone (54) größer ist als der (D2) der Quetschzonen (150, 156 - 250, 256) und der Durchmesser (D2) der Quetschzonen (150, 156 - 250, 256) größer ist als der Durchmesser (D3) des radial größere Abmessungen aufweisenden Abschnitts (32) des vorderen Endes der Welle (3).

10. Klauenläufer, **dadurch gekennzeichnet, dass** er mit einer daran befestigten Welle nach einem der vorhergehenden Ansprüche versehen ist.

11. Läufer nach Anspruch 10, **dadurch gekennzeichnet, dass** er eine Quetschkontur (75, 85) an jedem seiner axialen Enden (71, 81) aufweist.

12. Läufer nach Anspruch 11, **dadurch gekennzeichnet, dass** mindestens eine (85) der Konturen (75, 85) in mindestens zwei ringförmige Sektoren unterteilt ist.

13. Läufer nach einem der Ansprüche 10 bis 12, **dadurch gekennzeichnet, dass** die Konturen durch einen unteren Rand (286) begrenzt werden, der zur Achse X-X der Welle (3) geneigt ist.

14. Läufer nach einem der Ansprüche 10 bis 13, **dadurch gekennzeichnet, dass** er zwei Polräder (7, 8) aufweist, die jeweils einen Flansch aufweisen, welcher an seinem Außenumfang mehrere Zähne (9) und an seinem Innenumfang einen Halbkern (74, 84) aufweist und die beiden Halbkerne (74, 84) aneinander angrenzen.

15. Läufer nach Anspruch 14, **dadurch gekennzeichnet, dass** er Permanentmagneten aufweist, die zwischen den Zähnen der Polräder angebracht sind.

16. Drehende elektrische Maschine, **dadurch gekennzeichnet, dass** sie mit einem Klauenläufer nach einem der Ansprüche 10 bis 15 ausgestattet ist.

17. Drehende elektrische Maschine nach Anspruch 16, **dadurch gekennzeichnet, dass** sie aus einem Drehstromgenerator oder aus einem Starter-Generator besteht.
